# EUROPÄISCHE PATENTSCHRIFT

(11) **EP 1 499 858 B1**
(45) Veröffentlichungstag und Bekanntmachung des Hinweises auf die Patenterteilung: **07.07.2010**
(21) Anmeldenummer: 03725074.3
(22) Anmeldetag: 22.04.2003
(51) Int. Cl.: G01D 5/14, G01D 5/16

(54) **MESSEINRICHTUNG MIT EINEM HALLSENSOR UND VERFAHREN ZUR HERSTELLUNG DER MESS-EINRICHTUNG**
MEASURING DEVICE COMPRISING A HALL SENSOR AND METHOD FOR THE PRODUCTION THEREOF
DISPOSITIF DE MESURE A CAPTEUR DE HALL ET PROCEDE DE FABRICATION ASSOCIE

(30) Priorität: 30.04.2002 DE 10219473
(43) Veröffentlichungstag der Anmeldung: 26.01.2005
(73) Patentinhaber: Carl Freudenberg KG, 69469 Weinheim (DE); SSG Semiconductor Systems GmbH, 79856 Hinterzarten (DE)
(72) Erfinder: RÖHNER, Gerhard, 69502 Hemsbach (DE); TINZ, Reinhard, 64401 Gross-Bieberau (DE); DAUME, Volker, 69434 Hirschhorn (DE); BITTNER, Jörg, 69469 Weinheim-Hohensachsen (DE); MEINIG, Uwe, 48161 Münster-Nienberge (DE); BUSCH, Manfred, 60431 Frankfurt (DE)
(86) Internationale Anmeldenummer: PCT/EP2003/004161
(87) Internationale Veröffentlichungsnummer: WO 2003/093769

(56) Entgegenhaltungen:
- WO-A-93/22778
- US-A- 5 365 791

## Beschreibung

### Technisches Gebiet

Die Erfindung befasst sich mit einer Messeinrichtung mit einem Hallsensor insbesondere zur Wegmessung sowie mit einem Verfahren zur Herstellung der Messeinrichtung.

### Stand der Technik

Es ist bekannt, Hallsensoren zur Messung unterschiedlicher Messgrößen einzusetzen. Sie werden beispielsweise zur Messung von Magnetfeldern, Leistungsmessung bei Starkstromleitungen, für kontaktlose Steuerungen und Regelungen von Bewegungsvorgängen und anderem mehr, eingesetzt. Die Messung von Bewegungsvorgängen ist jedoch nur bei sehr kleinen Wegstrecken von nur wenigen Millimetern möglich.

In US 5 365 791 wird eine Messvorrichtung beschrieben, bei der in einem Kolben zwei zylindrische Permanentmagnete angeordnet sind, zwischen denen sich ein Hall-Generator befindet. Der Kolben mit den Magneten wird entlang des festeingebauten Hall-Generators bewegt, wodurch die erforderlichen Messdaten ermittelt werden. Die Pole der Magnete sind entgegengesetzt zueinander angeordnet.

### Darstellung der Erfindung

Der Erfindung liegt die Aufgabe zugrunde, eine Messeinrichtung mit einem Hallsensor zu schaffen, die insbesondere zur Wegmessung eingesetzt werden soll und mit der auch größere Weglängen als bisher genau gemessen werden können.

Außerdem soll ein Verfahren für die Herstellung der Messeinrichtung angegeben werden.

Die Lösung der gestellten Aufgabe erfolgt bei einer Messeinrichtung mit einem Hallsensor insbesondere zur Wegmessung erfindungsgemäß dadurch, dass der Hallsensor zentrisch und axial beweglich in einem Magnetrohr angeordnet ist, wobei das Magnetrohr in Längsrichtung in zwei Hälften (6,7) aufgeteilt ist und jede Hälfte (6,7) mit gegensätzlicher Polarität senkrecht zur Rohrachse quermagnetisiert ist. In Versuchen konnte ermittelt werden, dass eine solche Messeinrichtung sehr genaue Messungen über eine erheblich größere Wegstrecke zulässt, als das bisher bei Messeinrichtungen mit Hallsensoren der Fall ist. So wurde beispielsweise bei einer Magnetrohrlänge von 20 mm ein für die Messung nutzbarer, annähernd linearer Bereich von ca. 14 mm erreicht.

Bei der Ausführung der Messeinrichtung ist es wichtig, dass der Hallsensor in einer axial verschiebbaren Halterung gehalten ist, beziehungsweise sich axial in einer Halterung verschieben kann, dass jedoch Drehbewegungen des Hallsensors gegenüber dem Magnetrohr nicht möglich sind.

Der neue Hallsensor ist einfach im Aufbau und für lange Messwege geeignet. Er ist störungsunempfindlich und weitgehend linear. Darüber hinaus erfordert er keine externe Auswerteelektronik. Der Hallsensor wird zentrisch in dem Magnetrohr bewegt, wobei letzteres je hälftig mit gegensätzlicher Polarität quermagnetisiert ist. Die Flussdichte ist wenige Milimeter von den Polen entfernt im Magnetrohr am größten. In der Mitte des Magnetrohrs ist sie Null und ändert ihre Richtung.

Eine Kompensation der Temperaturabhängigkeit kann auf einfache Weise durch eine geeignete Paarung von Hallsensor und Magnetwerkstoff erreicht werden, wobei sich die Temperaturverläufe beider Materialien gegenseitig kompensieren.
Die Herstellung von Hallsensoren ist an sich bekannt. Für die Herstellung des neuen Magnetrohres für die Messeinrichtung können verschiedene Methoden angewendet werden. Eine günstige Methode besteht darin, dass ein Rohr aus magnetisierbarem Material diametral durchmagnetisiert wird, so dass im oberen Teil des Rohres eine Hälfte des Rohres als magnetischer Nordpol und die andere Hälfte des Rohres als magnetischer Südpol magnetisiert ist. Im unteren Teil des Rohres wird umgekehrt verfahren, d.h. die eine Hälfte des Rohres wird als magnetischer Südpol und die andere Hälfte des Rohres als magnetischer Nordpol magnetisiert.

Ein sehr einfaches Verfahren zur Herstellung des Magnetrohres für die Messeinrichtung besteht darin, dass ein Rohr aus magnetisierbarem Material senkrecht zu seiner Achse durchmagnetisiert wird, so dass eine Hälfte des Rohres als magnetischer Nordpol und die andere Hälfte des Rohres als magnetischer Südpol magnetisiert ist. Sodann wird das Rohr quer zu seiner Achse durchgetrennt und eines der Rohrteile gegenüber dem anderen Rohrteil um 180 Grad gedreht. Auf diese Weise entstehen die sich diametral gegenüberliegenden Nord- beziehungsweise Südpole des Magnetrohres für die Messeinrichtung.

### Kurzbeschreibung der Zeichnung

Anhand der in der Zeichnung dargestellten Ausführungsbeispiele wird die Erfindung nachstehend näher erläutert.

Es zeigt
Fig. 1 und Fig. 2 den prinzipiellen Aufbau der Messeinrichtung in der Draufsicht und im Längsschnitt.
Fig. 3 ein Diagramm eines Messsignals aufgenommen in Gaus gegenüber dem Messweg.
Fig 4 die Vorgehensweise bei der diametralen Durchmagnetisierung und
Fig. 5 die Anwendung der Messeinrichtung bei einer pneumatischen Stelleinrichtung.

### Ausführung der Erfindung

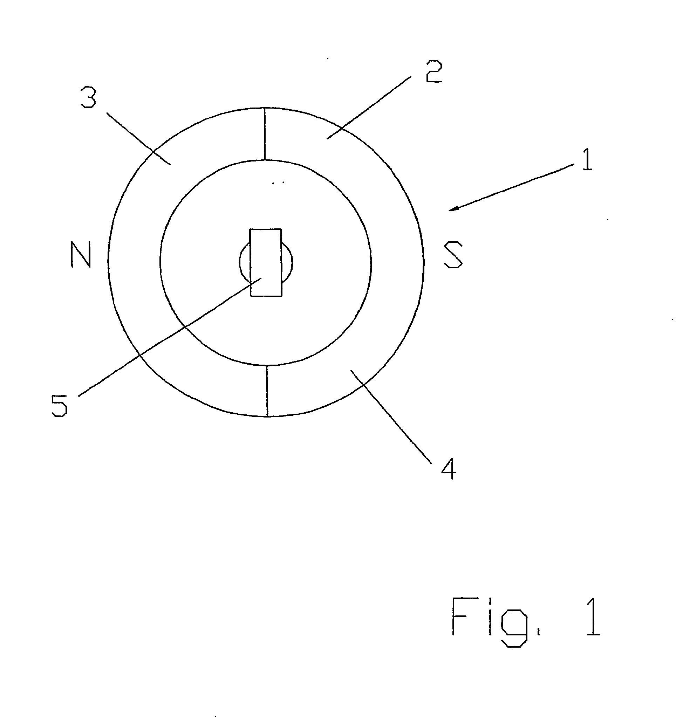

In der Fig. 1 ist der prinzipielle Aufbau der Messeinrichtung 1 gezeigt, die aus dem Magnetrohr 2 mit der Nordpolseite 3 und der Südpolseite 4 sowie dem zentrisch in dem Magnetrohr 2 angeordneten Hallsensor 5 besteht.

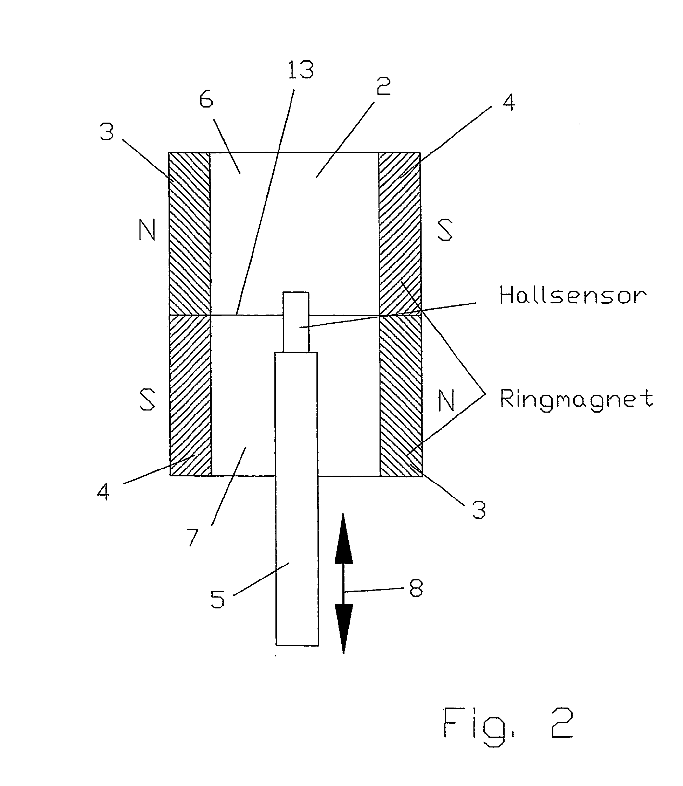

Wie der Fig. 2 zu entnehmen ist, ist das Magnetrohr 2 so ausgebildet, dass es in Längsrichtung gesehen in zwei Hälften aufgeteilt ist, nämlich die eine Hälfte 6 mit dem Nordpol 3 auf der linken Seite und dem Südpol 4 auf der rechten Seite. Während der andere Teil, die andere Hälfte 7 des Magnetrohres 2, umgekehrt angeordnet ist, d.h. der Nordpol 3 befindet sich auf der rechten Seite und der Südpol 4 auf der linken Seite des Magnetrohres 2. Wie mit dem Doppelpfeil 8 angezeigt, kann der Hallsensor 5 im Magnetrohr in axialer Richtung hin- und herbewegt werden. Hierfür ist eine nicht näher dargestellte Halterung vorgesehen, die eine Axialbewegung des Hallsensors 5 zulässt, jedoch verhindert, dass der Hallsensor 5 sich gegenüber dem Magnetrohr 2 verdrehen kann.

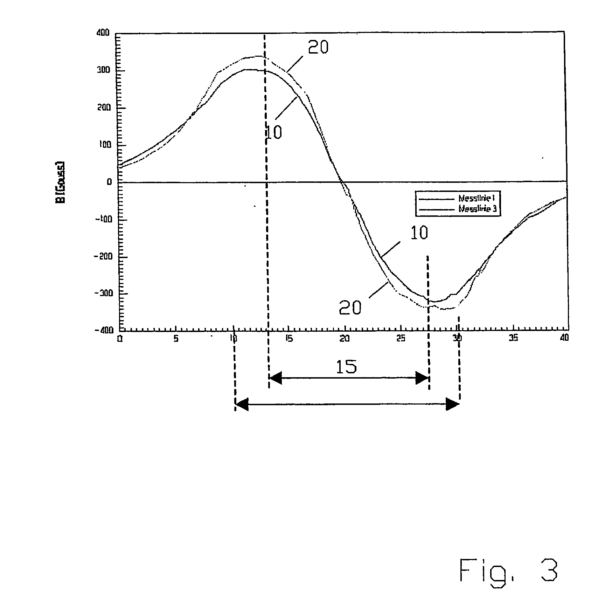

In der Fig. 3 ist das Diagramm eines durchgeführten Versuchs wiedergegeben und zwar in Gaus gegenüber der Wegstrecke. Bei einer Messeinrichtung mit einem Magnetrohr, dessen Länge 20 mm beträgt, ergibt sich ein nutzbarer, annähernd linearer Bereich von ungefähr 14 mm. Die eine Messlinie 10 wurde mit einem in der Mitte des Magnetrohres 2 angeordneten Hallsensor 5 gemessen, während die Messlinie 20 mit einem Hallsensor 5 gemessen wurde, der in der Nähe der Innenwandung des Magnetrohres 2 angeordnet war. Der äußere Durchmesser des Magnetrohres betrug 14 mm, der innere Durchmesser des Magnetrohres 8 mm. Beide Messlinien 10 und 20 verlaufen als nutzbar anzusehender Bereich 15 in etwa linear.

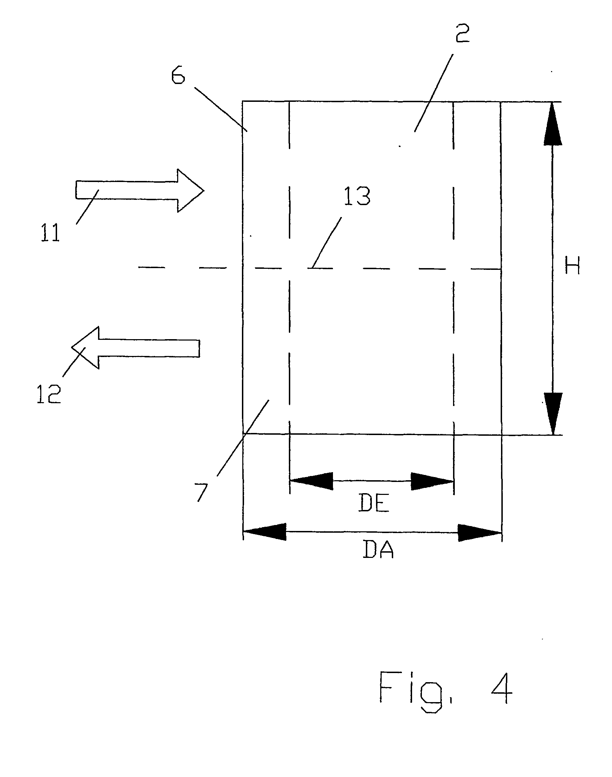

In der Fig. 4 ist eine Seitenansicht des für die Messungen benutzten Magnetrohres 2 gezeigt. Die Höhe des Rohres betrug H = 24 mm, der innere Durchmesser DE 8 mm und der äußere Durchmesser DA 14 mm. Die auf der Zeichnung obere Hälfte 6 des Rohres 2 wurde wie mit dem Pfeil 11 angedeutet von links nach rechts durchmagnetisiert, während die untere Hälfte 7 des Magnetrohres 2 in der entgegengesetzten Richtung wie mit dem Pfeil 12 angedeutet durchmagnetisiert wurde. Durch diese diametrale Durchmagnetisierung des Magnetrohres 2 wird die in Fig. 2 gezeigte Anordnung der Magnetpole 3 und 4 erreicht.

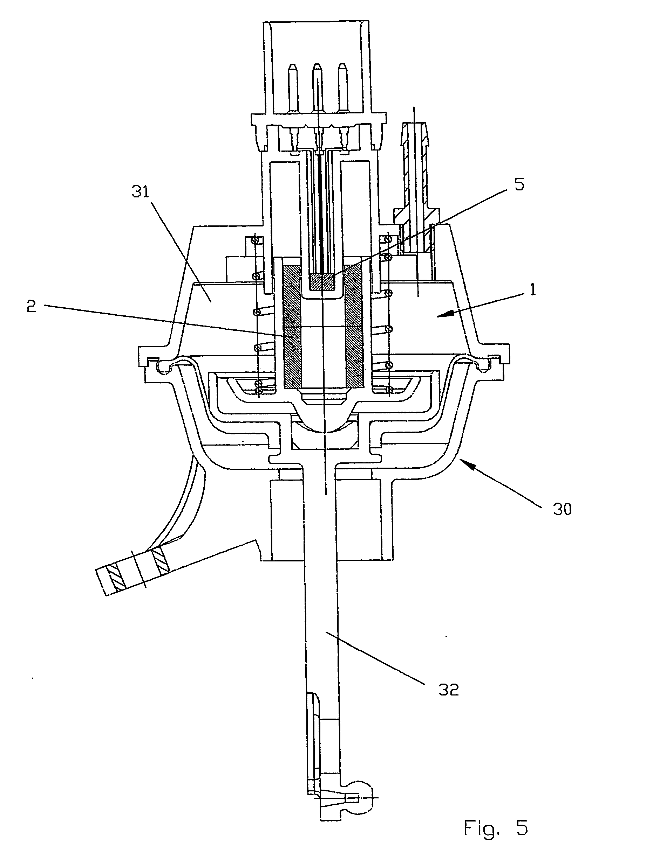

Die Fig. 5 zeigt ein praktisches Ausführungsbeispiel für die Anwendung der neuen Messeinrichtung 1. Die Messeinrichtung 1 ist zentrisch in einem im KFZ-Bereich angewandten Unterdrucksteller angeordnet. Das Magnetrohr 2 entspricht in seinem Aufbau dem Magnetrohr nach den Figuren 1 und 2. In der Mitte des Magnetrohrs 2 befindet sich zentrisch der Hallsensor 5. Die gesamte Messeinrichtung 1 ist innerhalb der Unterdruckkammer 31 der Verstelleinrichtung 30 angeordnet. Über die Messeinrichtung 1 kann die Lage der Stütze 32 in Bezug zu ihrer Nulllage gemessen und an die Motorelektronik übermittelt werden.

## Patentansprüche

1. Messeinrichtung mit einem Hallsensor, insbesondere zur Wegmessung, **dadurch gekennzeichnet, dass** der Hallsensor (5) zentrisch und axial beweglich in einem Magnetrohr (2) angeordnet ist, wobei das Magnetrohr (2) in Längsrichtung in zwei Hälften (6, 7) aufgeteilt ist und jede Hälfte (6, 7) mit gegensätzlicher Polarität senkrecht zur Rohrachse quermagnetisiert ist.

2. Messeinrichtung nach Anspruch 1 **dadurch gekennzeichnet, dass** der Hallsensor (5) axial verschiebbar in einer Halterung gehalten ist, die Drehbewegungen des Hallsensors (5) gegenüber dem Magnetrohr (2) verhindert.

3. Verfahren zur Herstellung eines Magnetrohres für die Messeinrichtung nach einem der Ansprüche 1 oder 2, **dadurch gekennzeichnet, dass** die obere und untere Hälfte (6 und 7) eines aus einem magnetisierbaren Material bestehendesn Rohres (2) in entgegengesetzten Richtungen (11, 12) derart diametral durchmagnetisiert werden, dass die obere Hälfte (6) des Rohres (2) in radialer Richtung (11) mit einem magnetischen Nordpol (3) und einem magnetischen Südpol (4) magnetisiert ist und die untere Hälfte (7) des Rohres (2) in entgegengesetzter Richtung (12) mit einem magnetischen Nordpol (3) und einem magnetischen Südpol (4) versehen ist.

4. Verfahren zur Herstellung eines Magnetrohres für die Messeinrichtung nach einem der Ansprüche 1 oder 2 **dadurch gekennzeichnet, dass** ein Rohr (2) aus magnetisierbarem Material senkrecht zu seiner Achse durchmagnetisiert wird, so dass eine Seitenhätfte (6) des Rohres (2) als magnetischer Nordpol (3) und die andere Seitenhälfte (7) des Rohres (2) als magnetischer Südpol (4) magnetisiert ist und dass so-dann das Rohr (2) quer zu seiner Achse in seiner Mitte (13) durchtrennt und eine Rohrteilhälfte (6) oder (7) gegenüber der anderen Rohrteilhälfte (6 oder 7) um 180 Grad gedreht wird.

## Claims

1. Measuring device comprising a Hall sensor, in particular for measuring distances, **characterized in that** the Hall sensor (5) is arranged in a central and axially movable manner in a magnetic tube (2), the magnetic tube (2) being subdivided in the longitudinal direction into two halves (6, 7), and each half (6, 7) being cross-magnetized with opposite polarity in a manner perpendicular to the tube axis.

2. Measuring device according to Claim 1, **characterized in that** the Hall sensor (5) is held in an axially displaceable manner in a holder which prevents rotational movements of the Hall sensor (5) with respect to the magnetic tube (2).

3. Method for producing a magnetic tube for the measuring device according to either of Claims 1 and 2, **characterized in that** the upper and lower halves (6 and 7) of a tube (2) consisting of a magnetizable material are diametrically magnetized in opposite directions (11, 12) in such a manner that the upper half (6) of the tube (2) is magnetized in the radial direction (11) with a magnetic north pole (3) and a magnetic south pole (4), and the lower half (7) of the tube (2) is provided with a magnetic north pole (3) and a magnetic south pole (4) in the opposite direction (12).

4. Method for producing a magnetic tube for the measuring device according to either of Claims 1 and 2, **characterized in that** a tube (2) made of magnetizable material is magnetized in a manner perpendicular to its axis, with the result that one lateral half (6) of the tube (2) is magnetized as the magnetic north pole (3) and the other lateral half (7) of the tube (2) is magnetized as the magnetic south pole (4), and **in that** the tube (2) is then severed in its centre (13) transversely to its axis, and one tube part half (6 or 7) is rotated through 180 degrees with respect to the other tube part half (6 or 7).

## Revendications

1. Dispositif de mesure comprenant un capteur à effet Hall, notamment pour une mesure de course, **caractérisé en ce que** le capteur à effet Hall (5) est disposé de manière centrée et avec mobilité axiale dans un tube magnétique (2), le tube magnétique (2) étant divisé en deux moitiés (6, 7) dans le sens longitudinal et chaque moitié (6, 7) étant magnétisée transversalement, perpendiculairement à l'axe du tube, avec des polarités opposées.

2. Dispositif de mesure selon la revendication 1, **caractérisé en ce que** le capteur à effet Hall (5) est maintenu dans un support de manière à pouvoir coulisser dans le sens axial, lequel empêche les mouvements de rotation du capteur à effet Hall (5) par rapport au tube magnétique (2).

3. Procédé de fabrication d'un tube magnétique pour le dispositif de mesure selon l'une des revendications 1 ou 2, **caractérisé en ce que** les moitiés (6 et 7) supérieure et inférieure d'un tube (2) constitué d'un matériau magnétisable sont magnétisées diamétralement dans des directions opposées (11, 12) de telle sorte que la moitié supérieure (6) du tube (2) est magnétisée dans la direction radiale (11) avec un pôle nord magnétique (3) et un pôle sud magnétique (4) et la moitié inférieure (7) du tube (2) est munie d'un pôle nord magnétique (3) et d'un pôle sud magnétique (4) dans la direction opposée (12).

4. Procédé de fabrication d'un tube magnétique pour le dispositif de mesure selon l'une des revendications 1 ou 2, **caractérisé en ce qu'**un tube (2) en matériau magnétisable est magnétisé perpendiculairement à son axe de sorte qu'une moitié latérale (6) du tube (2) est magnétisée en tant que pôle nord magnétique (3) et l'autre moitié latérale (7) du tube (2) en tant que pôle sud magnétique (4) et que le tube (2) est ensuite sectionné en son centre (13) transversalement à son axe et une moitié partielle de tube (6 ou 7) est tournée de 180 degrés par rapport à l'autre moitié partielle de tube (6 ou 7).
